(19) Europäisches Patentamt / European Patent Office / Office européen des brevets

(11) **EP 4 098 804 B1**

(12) **EUROPEAN PATENT SPECIFICATION**

(45) Date of publication and mention
of the grant of the patent:
**17.09.2025 Bulletin 2025/38**

(21) Application number: **21922818.6**

(22) Date of filing: **27.01.2021**

(51) International Patent Classification (IPC):
**E02F 3/43** *(2006.01)*    **E02F 9/20** *(2006.01)*
**E02F 9/22** *(2006.01)*

(52) Cooperative Patent Classification (CPC):
**E02F 9/2203; E02F 3/435; E02F 9/123;**
**E02F 9/265;** E02F 3/32

(86) International application number:
**PCT/JP2021/002885**

(87) International publication number:
**WO 2022/162795 (04.08.2022 Gazette 2022/31)**

(54) **HYDRAULIC EXCAVATOR**

HYDRAULIKBAGGER

EXCAVATRICE HYDRAULIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.12.2022 Bulletin 2022/49**

(73) Proprietor: **Hitachi Construction Machinery Co.,
Ltd.
Tokyo 110-0015 (JP)**

(72) Inventors:
• **SUZUKI, Yusuke**
  **Tsuchiura-shi,
  Ibaraki 300-0013 (JP)**

• **TANAKA, Hiroaki**
  **Tsuchiura-shi,
  Ibaraki 300-0013 (JP)**
• **NAKANO, Hisami**
  **Tsuchiura-shi,
  Ibaraki 300-0013 (JP)**

(74) Representative: **Manitz Finsterwald
Patent- und Rechtsanwaltspartnerschaft mbB
Martin-Greif-Straße 1
80336 München (DE)**

(56) References cited:
WO-A1-2020/049623    WO-A1-2020/049623
JP-A- 2014 122 510    JP-A- 2018 080 510
JP-A- H04 366 236    JP-B1- 5 947 477
JP-B1- 5 947 477    US-A1- 2017 089 033
US-A1- 2018 073 219    US-A1- 2021 148 082

EP 4 098 804 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to hydraulic excavators used for various works such as road construction, construction work, civil engineering work, and dredging work.

Background Art

Known hydraulic excavators, which are used for road construction, construction work, civil engineering work, dredging work, etc., include a slewing body that is slewably mounted to the upper part of the traveling body traveling by the power system, and a multi-joint working front attached to the slewing body to be vertically swingable. Various components of the working front are driven by cylinders. The working front includes a boom, an arm, and a bucket. Some hydraulic excavators of this type have a machine control function of setting an operable area, within which the working front semi-automatically operates. During the machine controlling, the operator configures a construction target surface. For the boom operation, the function limits the operating speed of the boom for deceleration and stopping in accordance with the distance between the construction target surface and the bucket so as to avoid the bucket from entering the construction target surface. For the arm operation, the function allows the boom or the bucket to operate semi-automatically along the construction target surface.

When excavating hard soil with a hydraulic excavator, the operator jacks up the excavator (details are described below) so as to raise the front of the traveling body with the rear of the traveling body and the working front serving as the fulcrum. The excavation force of the working front is at its maximum when the hydraulic excavator is jacked up. The operator therefore excavates the hard soil efficiently and precisely by fine-tuning the operation amount of the control lever through the comprehensive judgment of: the hardness of the soil to be excavated; the distance between the target construction surface and the bucket; and the state of jack-up of the hydraulic excavator.

Patent Literature 1 discloses the technique for correcting the boom operating speed. To this end, the technique integrates the distance between the target surface of construction and the bucket over time for accurate excavation using machine control. When the soil to be excavated is hard and the construction target surface and the bucket are continuously kept apart from each other, this technique corrects the operating speed of the boom so as to bring the bucket closer to the construction target surface. If the excavation reaction force acting on the bucket exceeds the maximum excavation force of the hydraulic excavator, the hydraulic excavator jacks up. That is, if the construction target surface and the bucket are continuously kept apart from each other, the technique of Patent Literature 1 corrects the operating speed of the boom, and the hydraulic excavator is gradually jacked up.

Citation List

Patent Literature

Patent Literature 1: JP 5947477 B
WO 2020/049623 A1 discloses a work machine with a controller configured to set a target work surface and to control a jack-up angle to a target value.

Technical Problem

The machine-controlled excavation work requires quick jack-up of the hydraulic excavator like typical manual excavation work by operators from the viewpoint of operability and workability. Further, as described above, the machine-controlled excavation work requires accurate control of the working front so that the bucket does not enter the construction target surface. Therefore, the technique is required to control the jack-up speed of the hydraulic excavator for better operability and workability of the operator while maintaining the accuracy of excavation.

According to the technique described in Patent Literature 1, however, the hydraulic excavator may be jacked up slowly, because the correction amount of the boom operating speed increases with the length of time that the construction target surface and the bucket are kept apart from each other. This means that the hydraulic excavator will fail to reach a predetermined jack-up speed unless the construction target surface and the bucket are kept apart from each other for a certain period of time. The hydraulic excavator therefore will fail to quickly jack up in the vicinity of the construction target surface.

Summary of Invention

It is the object of the invention to provide a hydraulic excavator capable of quickly jacking up in the vicinity of a construction target surface.

Solution to Problem

The above object is accomplished by the features of claim 1. A hydraulic excavator has the features of claim 1. It includes: a traveling body that travels; a slewing body mounted to the traveling body to be slewable; a working front mounted to the slewing body to be swingable, the working front having a boom, an arm, and a bucket; an actuator configured to drive the boom, the arm, and the bucket; an operation amount detector configured to detect an operation amount of an operation device to operate the actuator; a posture detector configured to detect a posture of the working front and a posture of the slewing body; a target surface management unit configured to set a construction target surface and calculate a target surface distance that is a distance between the set construction target surface and the bucket; a drive controller configured to calculate a target operation speed of the actuator based on the operation amount, the posture of the working front, and the target surface distance so that the bucket excavates along the construction target surface, and generate a motion command value to the actuator; and a drive unit configured to drive the actuator in accordance with the motion command value. The drive controller is configured to determine a target jack-up speed when the hydraulic excavator jacks up the hydraulic excavator based on the target surface distance, and correct the target operation speed based on the determined target jack-up speed.

The hydraulic excavator according to the present invention includes the drive controller that determines a target jack-up speed when the hydraulic excavator jacks up the hydraulic excavator based on the target surface distance, and corrects the target operation speed based on the determined target jack-up speed. This allows the hydraulic excavator to quickly jack up in the vicinity of a construction target surface.

Advantageous Effects of Invention

The present invention allows the hydraulic excavator to quickly jack up in the vicinity of a construction target surface.

Brief Description of Drawings

Fig. 1 is a side view showing a hydraulic excavator according to one embodiment.
Fig. 2 shows the configuration of a control system of the hydraulic excavator.
Fig. 3 shows the configuration of a drive controller of the hydraulic excavator.
Fig. 4 is a side view showing the hydraulic excavator that is jacked up according to one embodiment.
Fig. 5 shows control logic for the drive controller of the hydraulic excavator.
Fig. 6 shows the relationship between the boom cylinder speed limit and the target surface distance.
Fig. 7 shows a table for determining the target jack-up speed based on the target surface distance.
Fig. 8 shows a table for determining the target jack-up speed based on the bucket-to-target surface angle.
Fig. 9 shows a table for determining the target jack-up speed based on the bucket-to-traveling body distance.
Fig. 10 shows a table for determining the target jack-up speed based on the traveling body inclination angle.

Fig. 11 shows a table for determining the target jack-up speed based on the slewing body relative angle.
Fig. 12A shows a change of the traveling body inclination angle over time when an excavation operation is performed.
Fig. 12B shows a change of the boom-speed command value over time when an excavation operation is performed.
Fig. 13 shows a table for determining the drive command value based on the requested speed.
Fig. 14 is a flowchart showing the control process by the drive controller.

Description of Embodiments

The following describes a hydraulic excavator that is one embodiment according to the present invention, with reference to the attached drawings. **In** the following descriptions, upper, lower, left, right, front and rear directions and positions are based on the typical operating state of the hydraulic excavator, that is, when the traveling body of the hydraulic excavator comes in contact with the ground.

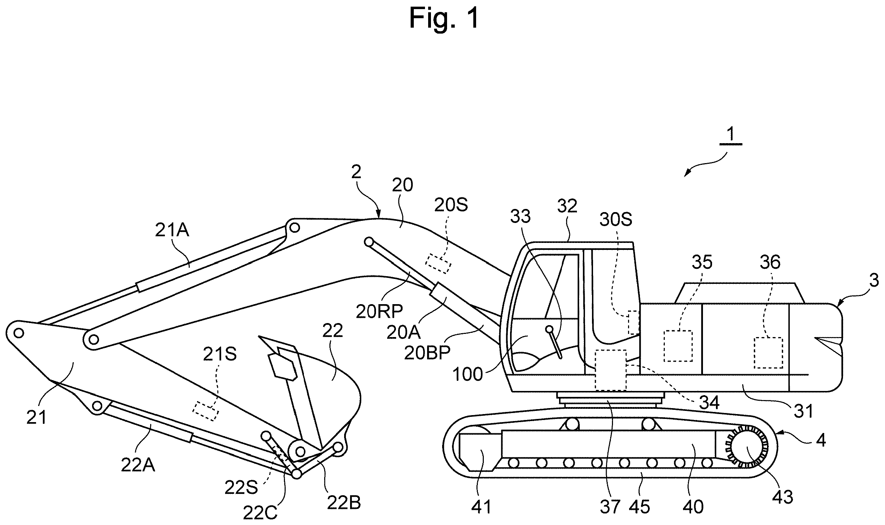

As shown in Fig. 1, a hydraulic excavator 1 according to the present embodiment includes a traveling body 4 that travels by a power system, a slewing body 3 mounted to the traveling body 4 so as to be slewable left and right, and a working front 2 attached to the slewing body 3. In one example, the traveling body 4 and the slewing body 3 are each driven by a hydraulic actuator.

<Working front>

The working front 2 is configured to swing vertically relative to the slewing body 3. This working front 2 includes a boom 20 connected to the slewing body 3, an arm 21 connected to the boom 20, a bucket 22 connected to the arm 21, a boom cylinder 20A having one end connected to the boom 20 and the other end connected to the slewing body 3, an arm cylinder 21A having one end connected to the arm 21 and the other end connected to the boom 20, a first link 22B, a second link 22C, and a bucket cylinder 22A having one end connected to second link 22C and the other end connected to the arm 21. Each of these components is configured to swing vertically around the connecting portion.

The boom cylinder 20A, arm cylinder 21A, and bucket cylinder 22A correspond to an "actuator" recited in the claims. For example, they each include a hydraulic actuator that is capable of driving the boom 20, arm 21, or bucket 22 by their expansion and contraction. The bucket 22 may be replaced with a grapple, breaker, ripper, magnet, or any other working tools not shown.

The boom 20 has a built-in boom inertial measurement unit (IMU) sensor 20S that detects the posture of the boom 20, and the arm 21 has a built-in arm IMU sensor 21S that detects the posture of the arm 21. The second link 22C has a built-in bucket IMU sensor 22S that detects the posture of the bucket 22. These boom IMU sensor 20S, arm IMU sensor 21S, and bucket IMU sensor 22S each include an angular rate sensor and an acceleration sensor.

The boom cylinder 20A also has a cylinder pressure sensor attached to it, and the cylinder pressure sensor includes a boom bottom pressure sensor 20BP and a boom rod pressure sensor 20RP.

<Slewing body>

The slewing body 3 includes a slewing body IMU sensor 30S, a main frame 31, a driver's cab 32, an operation amount detector 33, a drive controller 34, a drive unit 35, a prime mover 36, a slewing angle sensor 37, and a target surface management unit 100. The main frame 31 is the base portion of the slewing body 3 and is slewably mounted to the traveling body 4. The slewing body IMU sensor 30S, the driver's cab 32, the drive controller 34, the drive unit 35, and the prime mover 36 are located above the main frame 31. The slewing body IMU sensor 30S includes an angular rate sensor and an acceleration sensor, and detects the inclination of the slewing body 3 relative to the ground. In one example, the slewing angle sensor 37 is a potentiometer, and is attached to be able to detect the relative angle between the slewing body 3 and the traveling body 4.

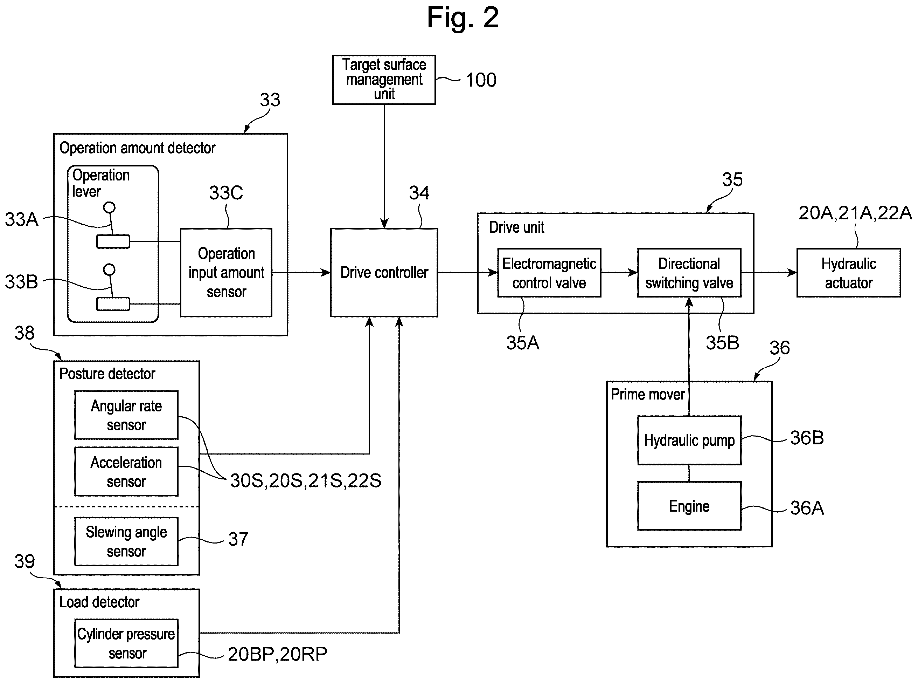

The operation amount detector 33 is located inside the driver's cab 32, and includes two operation levers (operation device) 33A and 33B and an operation input amount sensor 33C (see Fig. 2) that detects the tilting amount of these levers. The operation input amount sensor 33C is configured to detect the tilting amount of the operation levers 33A and 33B by the operator (i.e., the operation amount R of the operation levers), and thus convert the requested speed that is requested from the operator for the working front 2 into electrical signals. The operation levers 33A and 33B may be hydraulically piloted.

The drive unit 35 includes an electromagnetic control valve 35A and a directional switching valve 35B (see Fig. 2), and drives these electromagnetic control valve 35A and directional switching valve 35B in accordance with a control command value instructed from the drive controller 34, thus activating the boom cylinder 20A, arm cylinder 21A, and bucket cylinder 22A that are hydraulic actuators.

The prime mover 36 includes an engine 36A and a hydraulic pump 36B (see Fig. 2), and generates hydraulic pressure necessary to power the operation of the hydraulic excavator 1. The target surface management unit 100 includes a target surface management controller.

<Traveling body>

The traveling body 4 includes a track frame 40, a front idler 41, a sprocket 43, and a crawler 45. The front idler 41 and the sprocket 43 are placed on the track frame 40, and the crawler 45 goes around the track frame 40 via those components. The operator operates the operation levers 33A and 33B to adjust the rotation speed of the sprocket 43, and drive the hydraulic excavator 1 via the crawler 45. The traveling body 4 is not limited to the structure including the crawler 45, and may include traveling wheels and legs.

Referring to Fig. 2, the following describes a control system of the hydraulic excavator 1. The control system of the hydraulic excavator 1 mainly includes the operation amount detector 33, a posture detector 38, a load detector 39, the target surface management unit 100, the drive unit 35, the drive controller 34, and the prime mover 36. The operation amount detector 33, the posture detector 38, the load detector 39, and the target surface management unit 100 are each electrically connected with the drive controller 34.

<Operation amount detector>

Hydraulic excavators are typically configured to increase the operating speed of each cylinder with the tilting amount of the corresponding lever (i.e., the operation amount R of the operation lever). Thus, the operator changes the tilting amount of the operation lever to change the operating speed of the corresponding cylinder and thus activate the hydraulic excavator. As described above, the operation amount detector 33 includes the operation levers 33A, 33B and the operation input amount sensor 33C. The operation input amount sensor 33C has a boom operation input amount sensor, an arm operation input amount sensor, and a bucket operation input amount sensor that are for electrical detection of the operation amount R of the operation levers 33A and 33B. This enables detection of the operator's requested speeds for the boom cylinder 20A, arm cylinder 21A, and bucket cylinder 22A. The sensors that detect the operation amount R are not limited to the one that directly detects the tilting amount of the operation levers, and may be a method that detects the operated pilot pressure.

<Posture detector>

The posture detector 38 includes the slewing body IMU sensor 30S, the boom IMU sensor 20S, the arm IMU sensor 21S, the bucket IMU sensor 22S, and the slewing angle sensor 37. These IMU sensors each have an angular rate sensor and an acceleration sensor, and thus obtain signals of angular rate and acceleration at their respective sensor positions. The boom 20, the arm 21, the bucket 22, the boom cylinder 20A, the arm cylinder 21A, the bucket cylinder 22A, the first link 22B, the second link 22C, and the slewing body 3 are each mounted to be swingable. The posture detector 38 therefore detects the posture of these boom 20, arm 21, bucket 22, and slewing body 3 from their mechanical link relationship.

The method for detecting the posture shown here is an example, which may include direct measurement of the relative angle of various parts of the working front 2, and the method of detecting the strokes of the boom cylinder 20A, arm cylinder 21A, and bucket cylinder 22A to detect the posture of various parts of the hydraulic excavator 1. As described above, the slewing angle sensor 37 is a potentiometer, which detects the relative angle of the traveling body 4 relative to the slewing body 3. The slewing angle sensor 37 may be any measurement device other than the potentiometer, as long as it can measure the slewing angle.

<Load detector>

The load detector 39 includes the boom bottom pressure sensor 20BP and the boom rod pressure sensor 20RP constituting the cylinder pressure sensor. The load detector 39 detects the load on the boom cylinder 20A (i.e., the pressure applied to the boom cylinder 20A) via these sensors. The method for detecting the load is not limited to this, and load cells may be used, for example.

<Target surface management unit>

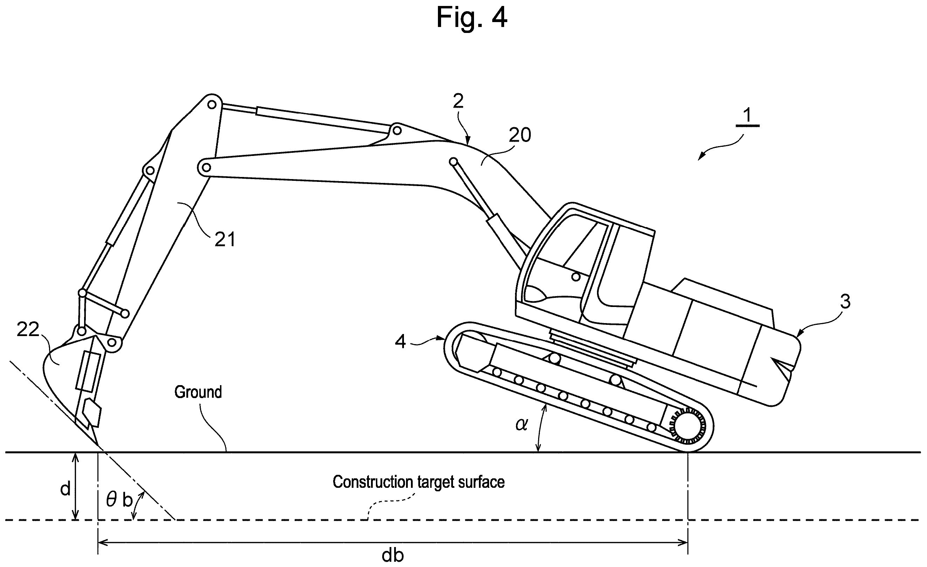

As shown in Fig. 4, the target surface management unit 100 sets a construction target surface, and also calculates the distance between the set construction target surface and the bucket 22 (hereinafter referred to as a target surface distance d) based on the traveling body inclination angle $\theta p$ calculated by an inclination angle calculation unit 820 (described later) and the posture of the working front 2 detected by a front posture detector 830 (described later), and outputs the calculated result to the drive controller 34. In the present embodiment, the target surface management unit 100 calculates the shortest distance between the set construction target surface and the bucket 22, and outputs the calculated result to the drive controller 34. This target surface management unit 100 also calculates the angle $\theta b$ between the bottom surface of the bucket 22 and the construction target surface (hereinafter referred to as a bucket-to-target surface angle $\theta b$) based on the traveling body inclination angle $\theta p$ calculated by the inclination angle calculation unit 820 and the posture of the working front 2 detected by the front posture detector 830. The construction target surface may be directly input and set by the operator, or may be set by inputting a design drawing or the like created in advance.

<Drive unit>

As described above, the drive unit 35 includes the electromagnetic control valve 35A and the directional switching valve 35B, and controls the amount of pressure oil to be supplied to the hydraulic actuators that drive various parts of the hydraulic excavator 1 in accordance with the control command values instructed from the drive controller 34. More specifically, the control current output from the drive controller 34 is converted to pilot pressure by the electromagnetic control valve 35A, so that the pilot pressure drives the spooling of the directional switching valve 35B. The hydraulic oil whose flow rate is adjusted by the directional switch valve 35B is then supplied to the hydraulic actuators that drive various parts of the hydraulic excavator 1 to drive various movable parts. For example, the drive unit 35 adjusts the flow rate and direction of hydraulic oil supplied from prime mover 36 to drive the hydraulic actuators that drive the boom cylinder 20A, the arm cylinder 21A, the bucket cylinder 22A, the slewing body 3, and the traveling body 4.

<Prime mover>

As described above, the prime mover 36 includes the engine 36A and the hydraulic pump 36B, and generates pressure oil necessary to drive the hydraulic actuators that drive the boom cylinder 20A, the arm cylinder 21A, the bucket cylinder 22A, the slewing body 3, and the traveling body 4. The prime mover 36 is not limited to this configuration, and other power sources such as an electric pump may be used.

<Drive controller>

The drive controller 34 includes a controller for drive control, and processes signals from the operation amount detector 33, the posture detector 38, the load detector 39, and the target surface management unit 100 and outputs operation commands to the drive unit 35.

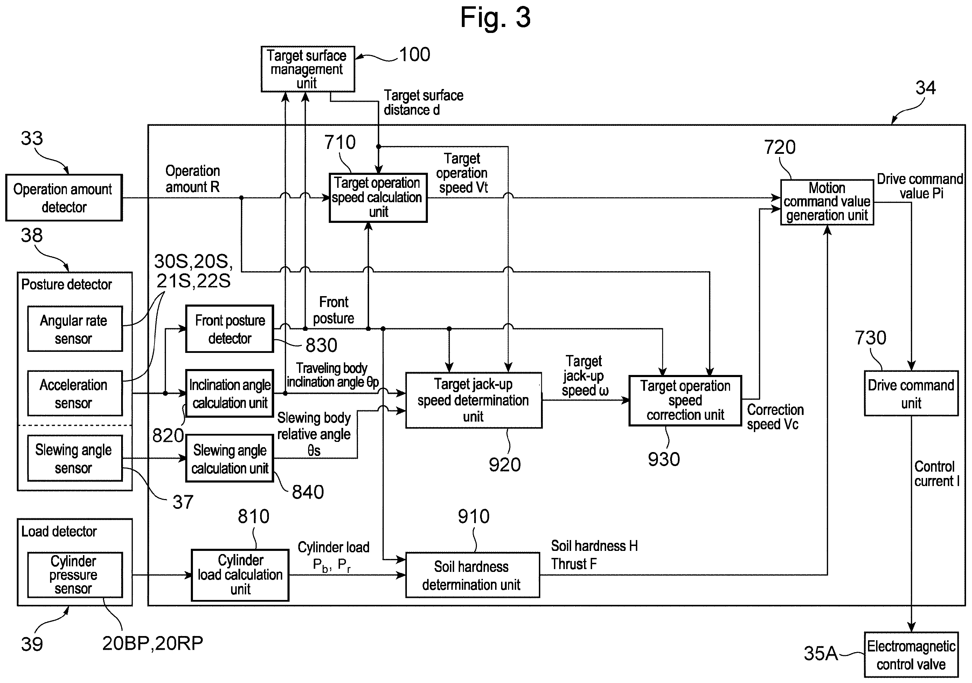

Fig. 3 shows the configuration of the drive controller of the hydraulic excavator. As shown in Fig. 3, the drive controller 34 mainly includes a target operation speed calculation unit 710, a motion command value generation unit 720, a drive command unit 730, a cylinder load calculation unit 810, a slewing angle calculation unit 840, an inclination angle calculation unit 820, the front posture detector 830, a soil hardness determination unit 910, a target jack-up speed determination unit 920, and a target operation speed correction unit 930.

The target operation speed calculation unit 710 calculates the target operation speed Vt of at least one of the boom cylinder 20A, the arm cylinder 21A, and the bucket cylinder 22A so that the bucket 22 moves along the construction target surface. This calculation is made based on the operation amount R of the operation levers 33A and 33B detected by the operation input amount sensor 33C, the target surface distance d calculated by the target surface management unit 100, and the posture of the working front 2 detected by the front posture detector 830.

For a specific calculation method of the target operating speed Vt, a well-known method can be used. For example, as described in JP 2018-080510 A, the target operation speed calculation unit 710 determines the moving direction and speed of the end of the bucket claw so that the end of the bucket claw moves along the construction target surface, and calculates and determines the target operating speed of the boom, arm and bucket so as to achieve the determined speed.

The motion command value generation unit 720 generates a drive command value Pi required to operate the cylinders using predetermined table data, based on the target operation speed Vt calculated by the target operation speed calculation unit 710. The motion command value generation unit 720 also generates a drive command value Pi based on the correction speed Vc output from the target motion speed correction unit 930. This drive command value corresponds to a "motion command value" recited in the claims.

The drive command unit 730 generates control current I required for driving the electromagnetic control valve 35A based on the drive command value Pi generated by the motion command value generation unit 720.

The cylinder load calculation unit 810 calculates the cylinder load (i.e., boom bottom side load $P_b$ and boom rod side load $P_r$) based on the detection results of the boom bottom pressure sensor 20BP and the boom rod pressure sensor 20RP attached to the boom cylinder 20A.

The slewing angle calculation unit 840 calculates the relative angle between the slewing body 3 and the traveling body 4 (hereinafter referred to as slewing body relative angle $\theta s$) based on the signal detected by the slewing angle sensor 37. The slewing body relative angle $\theta s$ is based on the travelling direction of the traveling body 4. In Figs. 1 and 4, the traveling body 4 travels leftward.

The inclination angle calculation unit 820 calculates the inclination angle of the slewing body 3 based on the acceleration signal and the angular velocity signal obtained from the slewing body IMU sensor 30S attached to the slewing body 3. In the present embodiment, the slewing body 3 and the traveling body 4 have the same inclination angle, so that the inclination angle of the slewing body 3 obtained by calculation is used as the inclination angle of the traveling body 4 (hereinafter, referred to as traveling body inclination angle $\theta p$).

The front posture detector 830 detects the posture of each of the boom 20, arm 21, and bucket 22 based on the acceleration signal and the angular velocity signal obtained from the boom IMU sensor 20S, the arm IMU sensor 21S, and the bucket IMU sensor 22S.

The soil hardness determination unit 910 determines the soil hardness of the place where the working front 2 excavates. To determine the soil hardness, methods include a method using the soil hardness H and a method using the thrust F of the boom cylinder 20A. In the method using the soil hardness H, the soil hardness determination unit 910 first calculates the hardness of soil (soil hardness H) where the working front 2 is excavating, based on the result from the front posture detector 830 and the cylinder load calculation unit 810, that is, the front posture and the boom cylinder load. Next, the soil hardness determination unit 910 determines the soil hardness by comparing the calculated soil hardness H with a predetermined hardness threshold. For example, if the calculated soil hardness H is greater than the hardness threshold, the soil hardness determination unit 910 determines that the soil is hard. In one example, the hardness threshold is determined based on empirical values of hardness for various soils.

In the method using the thrust F of the boom cylinder 20A, the soil hardness determination unit 910 first obtains the thrust F of the boom cylinder 20A based on the following equation (1). In equation (1), $S_b$ denotes the boom bottom side pressure receiving area, $P_b$ denotes the boom bottom side load, $S_r$ denotes the boom rod side pressure receiving area, and $P_r$ denotes the boom rod side load.

$$F = S_b \times P_b - S_r \times P_r \quad (1)$$

Next, the soil hardness determination unit 910 determines a threshold according to the posture of the working front 2, and compares the thrust F of the boom cylinder 20A obtained by the equation (1) with the threshold to determine the soil hardness. For example, if the thrust of the boom cylinder 20A is greater than the threshold, the solid hardness determination unit 910 determines that the soil is hard. The threshold in this case may be determined by a value calculated from the weight of the working front 2, or may be determined by using experimental values when the hydraulic excavator 1 is actually jacked up.

The target jack-up speed determination unit 920 calculates and determines target jack-up speed $\omega$ when the traveling body 4 is jacked up, based on the target surface distance d and bucket-to-target surface angle $\theta b$ calculated by the target surface management unit 100, the bucket-to-traveling body distance db, the traveling body inclination angle $\theta p$ calculated by the inclination angle calculation unit 820, and the slewing body relative angle $\theta s$ calculated by the slewing angle calculation unit 840. As shown in Fig. 4, the target surface distance d is the shortest distance between the construction target surface and the bucket 22, and the bucket-to-target surface angle $\theta b$ is the angle between the bottom surface of the bucket 22 and the construction target surface. The bucket-to-traveling body distance db is the distance between the bucket 22 and the traveling body 4 in the traveling direction of the hydraulic excavator 1, and is calculated by the target jack-up speed determination unit 920.

<Jack up>

Referring to Fig. 4, the following describes jack-up of the hydraulic excavator 1. As shown in Fig. 4, jack-up refers to a state in which the rear portion of the traveling body 4 and the bucket 22 are in contact with the ground, and the front portion of the traveling body 4 is floating in the air. Then, the angle between the bottom surface of the traveling body 4 and the ground is called jack-up angle $\alpha$. When the jack-up angle $\alpha$ is zero, the entire bottom surface of the traveling body 4 is grounded. The jack-up speed is a change of the jack-up angle $\alpha$ over time, and indicates the angular velocity of the traveling body 4 centered on the contact point between the traveling body 4 and the ground.

Note that the slewing body 3 is slewable relative to the traveling body 4. Thus, the directions of the slewing body 3 and the traveling body 4 may be in the opposite to those in the drawing or in lateral direction, depending on the working posture. In this case also, the angle between the ground contact point of the traveling body 4 and the ground is called the jack-up angle $\alpha$. Typically, the traveling body 4 is long in the traveling direction and has a small lateral width orthogonal to the traveling direction. Therefore, if the boom 20 is lowered at a constant operating speed without changing the posture of arm 21, the jack-up speed will become faster when the traveling body 4 is in the lateral direction relative to the slewing body 3 than when the traveling body 4 is in the traveling direction relative to the swing body 3, because the distance between the point where the traveling body 4 comes in contact with the ground and the bucket 22 is smaller in the former case.

<Target jack-up speed>

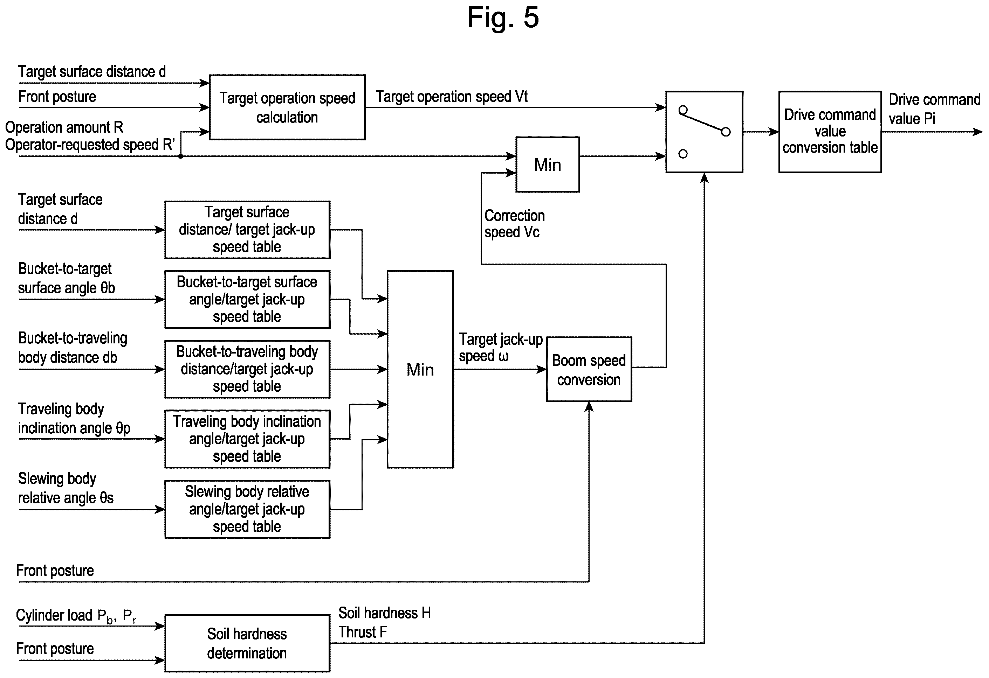

Referring to Figs. 5 to 13, the following describes a method of determining the target jack-up speed. As shown in Fig. 5, the target jack-up speed $\omega$ is determined by selecting the minimum value in a target jack-up speed table, which is determined based on the target surface distance d, bucket-to-target surface angle $\theta b$, bucket-to-traveling body distance db, traveling body inclination angle $\theta p$, and slewing body relative angle $\theta s$. The speed when the hydraulic excavator 1 jacks up differs depending on the posture of the working front 2. The speed of the boom cylinder 20A, for example, is therefore calculated according to the posture of the working front 2 so as to reach the target jack-up speed. The calculation method is a simple geometric operation, and the detailed description thereof will be omitted.

As shown in Fig. 5, for the calculated target operating speed of the boom cylinder 20A, the minimum value is selected so as not to exceed the speed R' requested by the operator, and is output as the correction speed Vc. For example, when the soil hardness determination unit 910 determines that the soil is hard, the correction speed Vc is selected instead of the target operation speed Vt calculated by the target operation speed calculation unit 710, and a drive command value Pi is calculated based on a drive command value conversion table.

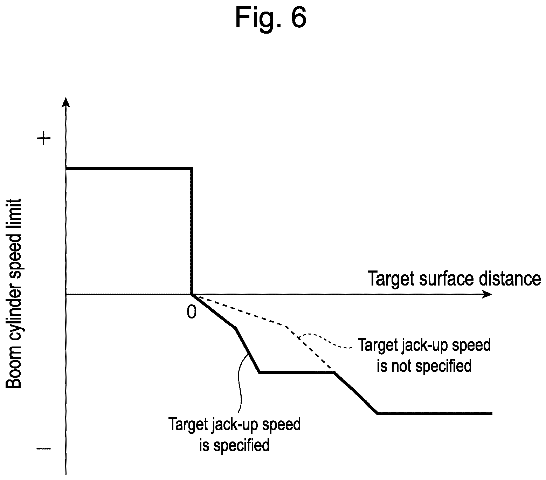

When the bucket 22 is brought closer to the construction target surface in normal machine control, the speed limit of the boom cylinder 20A with respect to the target surface distance d is as shown by the dotted line in Fig. 6 (i.e., this is an example of the case where the target jack-up speed is not specified). In contrast, when the control of the present embodiment is performed, the speed limit is as shown in the solid line in Fig. 6 (i.e., this is an example of the case where the target jack-up speed is specified). As can be seen from Fig. 6, in the example where the target jack-up speed is not specified, the slope of the dotted line is relatively gentle, so that the speed limit of the boom cylinder 20A is not relaxed and the boom lowering operation is relatively slow. In contrast, in the example where the target jack-up speed is specified, the slope rate of the solid line is relatively steep, and the speed limit of the boom cylinder 20A becomes large in a short time. Therefore, the speed limit of the boom cylinder 20A for the target construction surface that is close is relaxed to allow quick boom lowering operation, so that the hydraulic excavator 1 is able to be jacked up in a short period of time.

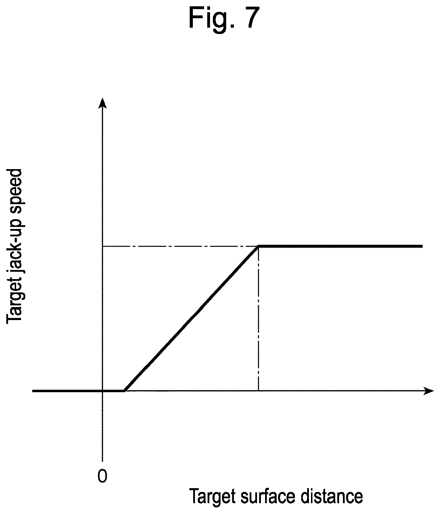

Figs. 7 through 11 show examples of tables for determining the target jack-up speed $\omega$ based on the target surface distance d, bucket-to-target surface angle $\theta b$, bucket-to-traveling body distance db, traveling body inclination angle $\theta p$, and slewing body relative angle $\theta s$, respectively. The values in these tables are expressed as linear functions for convenience of explanation, but they may be quadratic functions and others. Their formats and values may be determined based on experimental values and design concepts.

In the present embodiment, preferably the target jack-up speed determination unit 920 determines the target jack-up speed $\omega$ to be smaller as the target surface distance d is smaller (see Fig. 7). In this way, when the target jack-up speed $\omega$ is determined to be smaller as the target surface distance d is smaller, the bucket 22 will move slowly toward the construction target surface (e.g., at a limited speed so as not to excavate too much of the construction target surface), thereby preventing overexcavating of the construction target surface.

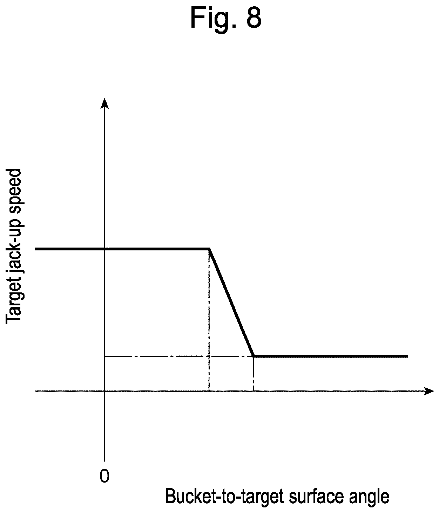

Preferably, the target jack-up speed determination unit 920 determines the target jack-up speed $\omega$ to be larger as the bucket-to-target surface angle $\theta b$ is smaller (see Fig. 8). When the bucket-to-target surface angle $\theta b$ is small, the construction target surface is not over-excavated. Therefore, a larger target jack-up speed $\omega$ may be determined for quick jack-up.

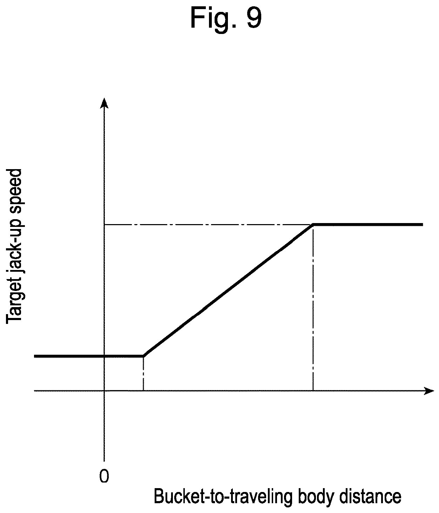

Preferably, the target jack-up speed determination unit 920 determines the target jack-up speed $\omega$ to be larger as the bucket-to-traveling body distance db is larger (see Fig. 9). When the bucket-to-traveling body distance db is large, it is at the beginning of excavating, and a larger target jack-up speed $\omega$ may be determined for quick jack-up. In other words, when the target surface distance d is small, this means that the excavating is about to end. Thus there is no need for quick jacking up.

Moreover, when the bucket is nearby, the excavation force of the bucket 22 increases due to the weight balance at the same jack-up speed, increasing the likelihood of over-excavating of the construction target surface. From the viewpoint of preventing such over-excavating, the target jack-up speed $\omega$ has to be determined small when the bucket-to-traveling body distance db is small.

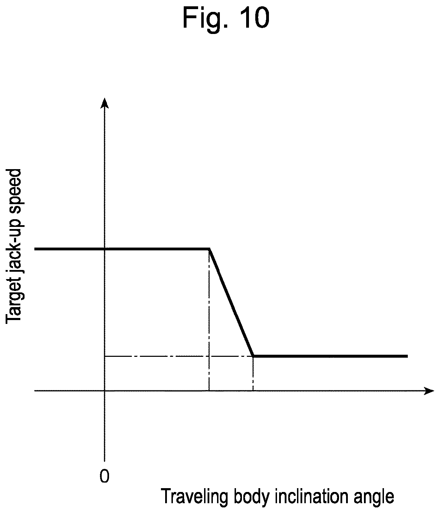

Preferably, the target jack-up speed determination unit 920 determines the target jack-up speed $\omega$ to be smaller as the traveling body inclination angle $\theta p$ is larger (see Fig. 10). When the traveling body inclination angle $\theta p$ is large, the hydraulic excavator 1 tends to become unstable, and quick jack-up tends to give the operator a sense of uneasiness. Therefore, the present embodiment makes jack-up slow to ensure good operability.

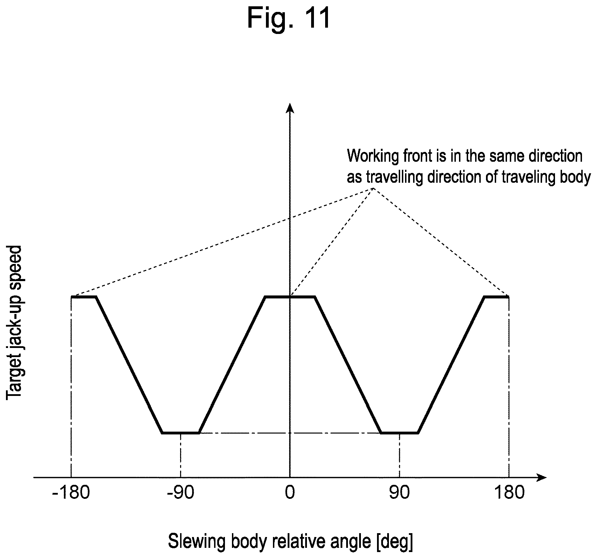

Preferably, the target jack-up speed determination unit 920 determines the target jack-up speed $\omega$ to be smaller as the slewing body relative angle $\theta s$ is larger (see Fig. 11). When the slewing body relative angle $\theta s$ is large, the working front 2 laterally faces the traveling body 4. The hydraulic excavator 1 therefore tends to become unstable, and quick jack-up tends to give the operator a sense of uneasiness. Therefore, the present embodiment makes jack-up slow to ensure good operability.

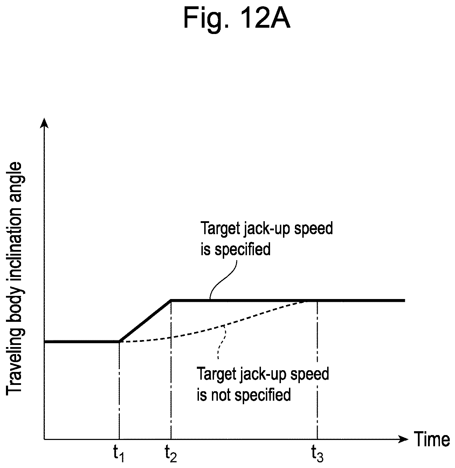

Fig. 12A shows an example of the change of the traveling body inclination angle $\theta p$ over time. In this drawing, the solid line indicates the case where the target jack-up speed $\omega$ is specified and the dotted line indicates the case where the target jack-up speed $\omega$ is not specified. As shown in Fig. 12A, when the target jack-up speed $\omega$ is specified, jack-up of the hydraulic excavator 1 is completed by time $t_2$, where the start time is $t_1$. In contrast, when the target jack-up speed $\omega$ is not specified, the jack-up is completed at time $t_3$, which is later than time $t_2$. In this way, when the target jack-up speed $\omega$ is specified, the change of the traveling body inclination angle $\theta p$ over time is rapid, and the jack-up operation can be performed in a shorter time than when the target jack-up speed $\omega$ is not specified.

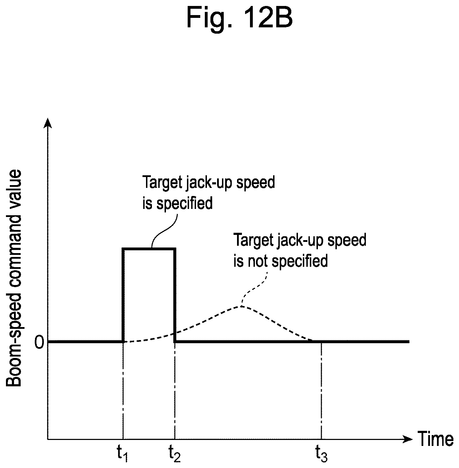

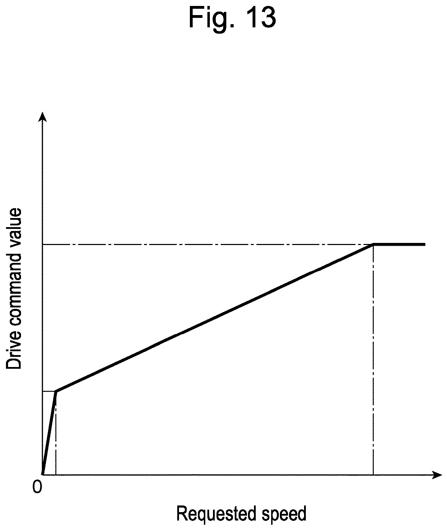

Fig. 12B shows an example of the change of the boom-speed command value over time. In this drawing, the solid line indicates the case where the target jack-up speed $\omega$ is specified and the dotted line indicates the case where the target jack-up speed $\omega$ is not specified. As shown in Fig. 12B, when the target jack-up speed $\omega$ is specified, the boom-speed command value suddenly increases immediately after the time $t_1$ ($t_1$ denotes the start time), and the boom speed command value becomes zero at time $t_2$ when jack-up of the hydraulic excavator 1 is completed. In contrast, when the target jack-up speed $\omega$ is not specified, the boom speed command value gradually increases from time $t_1$, and the boom speed command value reaches zero at time $t_3$ when the jack-up of the hydraulic excavator 1 is completed. In this way, the boom speed command value increases more suddenly when the target jack-up speed $\omega$ is specified than when the target jack-up speed $\omega$ is not specified. Therefore the former case allows jack-up operation in a shorter time. Fig. 13 shows an example of a table to convert requested speed (e.g., correction speed Vc) to drive command values to drive the boom. In this case, the motion command value generation unit 720 refers to the conversion table shown in Fig. 13 to generate a drive command value Pi based on the correction speed Vc.

The target operation speed correction unit 930 calculates the correction speed Vc for the boom cylinder 20A based on the front posture and the operation amount R by the operator so as to achieve the target jack-up speed $\omega$ of the traveling body 4 determined by the target jack-up speed determination unit 920. For a calculation method of the correction speed Vc, a well-known method can be used. The target operation speed correction unit 930 also outputs the calculated result to the motion command value generation unit 720.

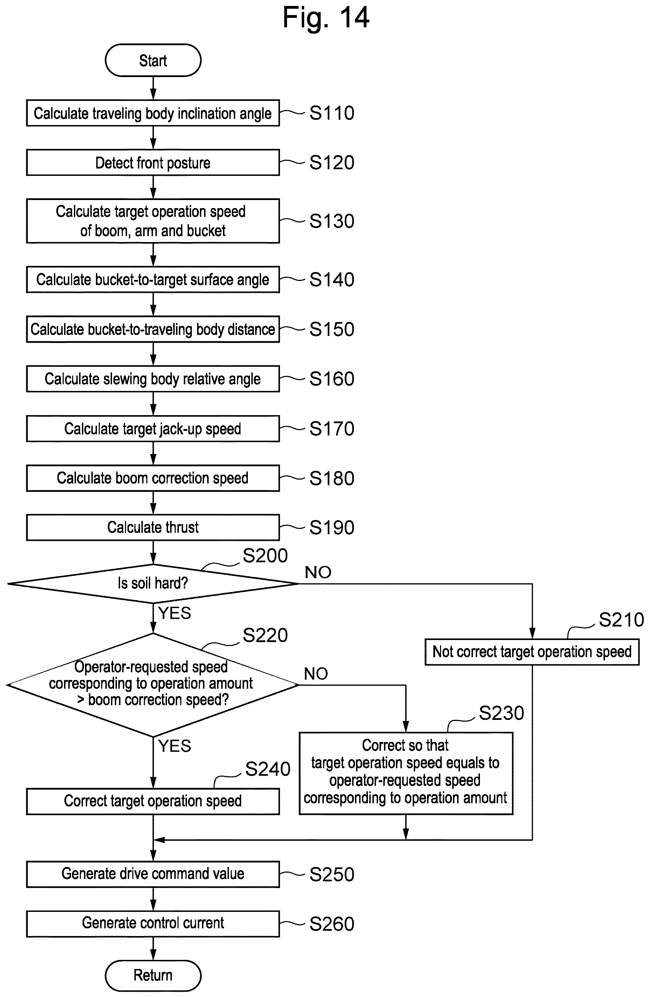

Referring to Fig. 14, the following describes the control process by the drive controller 34. First, in step S110, the traveling body inclination angle $\theta p$ is calculated. In this step, the inclination angle calculation unit 820 calculates the inclination angle of the slewing body 3 based on the acceleration signal and the angular velocity signal obtained from the slewing body IMU sensor 30S attached to the slewing body 3, where the calculated inclination angle of the slewing body 3 is the traveling body inclination angle $\theta p$.

In step S120 following step S110, the front posture is detected. At this time, the front posture detector 830 detects the posture of the boom 20, arm 21, and bucket 22 of the working front 2 based on the acceleration signal and the angular velocity signal obtained from the boom IMU sensor 20S, the arm IMU sensor 21S, and the bucket IMU sensor 22S, respectively. This detects the front posture.

In step S130 following step S120, the target operation speed Vt of the boom 20, arm 21, and bucket 22 is calculated. In this step, the target operation speed calculation unit 710 calculates the target operation speed Vt of at least one of the boom cylinder 20A, arm cylinder 21A, and bucket cylinder 22A so that the bucket 22 moves along the construction target surface, based on the front posture detected in step S120, the operation amount R of the operation levers 33A and 33B detected by the operation input amount sensor 33C, and the target surface distance d calculated by the target surface management unit 100. For example, the target operation speed calculation unit 710 calculates the target operation speed Vt of the boom cylinder 20A based on the front posture, the target surface distance d, and the operation amount R of the operation levers 33A and 33B so as not to excavate too much beyond the construction target surface.

In step S140 following step S130, the bucket-to-target surface angle $\theta b$ is calculated. In this step, the target surface management unit 100 calculates the angle between the bottom surface of the bucket 22 and the construction target surface.

In step S150 following step S140, the bucket-to-traveling body distance db is calculated. In this step, the target jack-up speed determination unit 920 calculates the bucket-to-traveling body distance db based on the posture of the working front detected in step S120.

In step S160 following step S150, the slewing body relative angle θs is calculated. In this step, the slewing angle calculation unit 840 calculates the slewing body relative angle θs based on the signal detected by the slewing angle sensor 37.

In step S170 following step S160, the target jack-up speed ω is calculated. In this step, the target jack-up speed determination unit 920 uses the target surface distance d in addition to the traveling body inclination angle θp calculated in step S110, the bucket-to-target surface angle θb calculated in step S140, the bucket-to-traveling body distance db calculated in step S150, and the slewing body relative angle θs calculated in step S160 to calculate and determine the target jack-up speed ω for jacking-up the traveling body 4 based on these.

In step S180 following step S170, the correction speed of the boom is calculated. In this step, the target operation speed correction unit 930 calculates the correction speed Vc of the boom cylinder 20A based on the front posture and the operator's operation amount R so as to achieve the target jack-up speed ω calculated in step S170.

In step S190 following step S180, the soil hardness determination unit 910 calculates the thrust F of the boom cylinder 20A based on the above equation (1).

In step S200 following step S190, the soil hardness determination unit 910 compares the calculated thrust of the boom cylinder 20A with a predetermined threshold to determine whether or not the soil is hard. If the calculated thrust of the boom cylinder 20A is less than or equal to the threshold, it is determined that the soil is not hard. Then, the drive controller 34 does not correct the target operation speed (see step S210). In step S210, the drive controller 34 directly uses the target operation speed Vt of the boom cylinder 20A calculated in step S130, for example. After step S210, the control process proceeds to step S250, where the motion command value generation unit 720 generates a drive command value Pi based on the target motion speed Vt.

If the thrust is determined to be greater than the threshold in step S200, the soil is determined hard, and the control process proceeds to step S220.

In step S220, the drive controller 34 determines whether or not the operator requested speed R' corresponding to the operation amount R of the operation levers 33A and 33B is larger than the correction speed Vc of the boom cylinder 20A calculated in step S180. The operator requested speed R' corresponding to the operation amount R is calculated by the target operation speed calculation unit 710. If it is determined that the operator requested speed R' corresponding to the operation amount R is not greater than the correction speed Vc of the boom cylinder 20A, the drive controller 34 corrects the target operation speed so that the target operation speed becomes equal to the operator requested speed R' corresponding to the operation amount R (see step S230). After step S230, the control process proceeds to step S250, where the motion command value generation unit 720 generates a drive command value Pi based on the corrected target motion speed (i.e., operator requested speed R' corresponding to the operation amount R).

If it is determined in step S220 that the operator requested speed R' corresponding to the operation amount R is greater than the correction speed Vc of the boom cylinder 20A calculated in step S180, the drive controller 34 corrects target operation speed without limiting the target operation speed (see step S240). In this step, the drive controller 34 corrects the target operation speed so that the correction speed Vc of the boom cylinder 20A calculated in step S180 is the target operation speed of the boom cylinder 20A. In step S250 following step S240, a drive command value is generated. In this step, the motion command value generation unit 720 generates a drive command value Pi based on the corrected target operation speed (i.e., the correction speed Vc of the boom cylinder 20A calculated in step S180).

In step S260 following step S250, control current is generated. In this step, the drive command unit 730 generates control current I required for driving the electromagnetic control valve 35A based on the drive command value Pi generated in step S250. This completes the series of control process.

In the hydraulic excavator 1 of this embodiment, the target jack-up speed determination unit 920 calculates and determines the target jack-up speed ω for jacking-up of the traveling body 4, based on the target surface distance d, bucket-to-target surface angle θb, bucket-to-traveling body distance db, traveling body inclination angle θp, and slewing body relative angle θs, and the target operation speed correction unit 930 calculates the correction speed Vc of the boom cylinder 20A to achieve the target jack-up speed ω of the traveling body 4. When excavating hard soil that requires jacking up, this configuration corrects the target operation speed regardless of the limit value of the boom operation speed near the construction target surface. In this way, this configuration sets any speed for jacking-up the hydraulic excavator, thus enabling quick jack-up near the target construction surface. When excavating soft soil that does not require jacking up, this configuration sets the speed of jacking-up the hydraulic excavator 1 at zero, that is, limits the correction of the operation speed of the boom cylinder 20A for jacking up. This prevents over-excavation of the construction target surface.

Further, if the soil hardness determination unit 910 determines that the soil is hard, the motion command value generation unit 720 generates a drive command value based on the target motion speed (i.e., correction speed Vc) corrected by the target motion speed correction unit 930.

Furthermore, the target operation speed correction unit 930 corrects the target operation speed so that the correction speed calculated based on the target jack-up speed $\omega$ does not exceed the operator requested speed R' corresponding to the operation amount R calculated by the target operation speed calculation unit 710. If jack-up is performed faster than the operator requested speed R' corresponding to the operation amount R of the operation lever by the operator, the operator tends to feel uneasy. This embodiment therefore performs jack-up so as not to exceed the operator requested speed R' corresponding to the operation amount R, thus further enhancing the operability. As a result, this embodiment achieves quick jack-up near the target construction surface, and enhances excavation accuracy as well as the operability and workability for the operator.

The above is a detailed description of the embodiments of the present invention. The present invention is not limited to the above-stated embodiments, and the design may be modified variously within the scope of the appending claims.

Reference Signs List

| | |
|---|---|
| 1 | Hydraulic excavator |
| 2 | Working front |
| 3 | Slewing body |
| 4 | Traveling body |
| 20 | Boom |
| 20BP | Boom bottom pressure sensor |
| 20RP | Boom rod pressure sensor |
| 20S | Boom IMU sensor |
| 21 | Arm |
| 21S | Arm IMU sensor |
| 22 | Bucket |
| 22S | Bucket IMU sensor |
| 30S | Slewing body IMU sensor |
| 33 | Operation amount detector |
| 33A, 33B | Operation lever (operation device) |
| 33C | Operation input amount sensor |
| 34 | Drive controller |
| 35 | Drive unit |
| 35A | Electromagnetic control valve |
| 37 | Slewing angle sensor |
| 38 | Posture detector |
| 39 | Load detector |
| 100 | Target surface management unit |
| 710 | Target operation speed calculation unit |
| 720 | Motion command value generation unit |
| 730 | Drive command unit |
| 810 | Cylinder load calculation unit |
| 820 | Inclination angle calculation unit |
| 830 | Front posture detector |
| 840 | Slewing angle calculation unit |
| 910 | Soil hardness determination unit |
| 920 | Target jack-up speed determination unit |
| 930 | Target operation speed correction unit |

**Claims**

1. A hydraulic excavator (1) comprising: a traveling body (4) configured to travel;

   a slewing body (3) mounted to the traveling body (4) to be slewable;
   a working front (2) mounted to the slewing body (3) to be swingable, the working front (2) having a boom (20), an arm (21), and a bucket (22);
   an actuator (20A, 21A, 22A) configured to drive the boom (20), the arm (21), and the bucket (22);
   an operation amount detector (33) configured to detect an operation amount of an operation device (33A, 33B) to operate the actuator (20A, 21A, 22A);
   a posture detector (38) configured to detect a posture of the working front (2) and a posture of the slewing body (3);
   a target surface management unit (100) configured to set a construction target surface and calculate a target surface distance that is a distance between the set construction target surface and the bucket (22);
   a drive controller (34) configured to calculate a target operation speed of the actuator (20A, 21A, 22A) based on the operation amount, the posture of the working front (2), and the target surface distance so that the bucket (22) excavates along the construction target surface, and generate a motion command value to the actuator (20A, 21A, 22A); and
   a drive unit (35) configured to drive the actuator (20A, 21A, 22A) in accordance with the motion command value,
   **characterized in that**:
   the drive controller (34) is configured to determine a target jack-up speed when the hydraulic excavator (1) jacks up the hydraulic excavator (1) based on the target surface distance, and correct the target operation speed based on the determined target jack-up speed.

2. The hydraulic excavator (1) according to claim 1, further comprising a load detector (39) configured to detect a load of the actuator (20A, 21A, 22A), wherein
   the drive controller (34) is configured to determine a soil hardness of a place to be excavated by the working front (2) based on a result detected by the load detector (39), correct the target operation speed based on the soil hardness and a correction speed calculated based on the target jack-up speed, and generate the motion command value based on the corrected target operation speed.

3. The hydraulic excavator (1) according to claim 1, wherein the drive controller (34) is configured to determine the target jack-up speed to be smaller as the target surface distance is smaller.

4. The hydraulic excavator (1) according to claim 1, wherein the target surface management unit (100) is configured to calculate a bucket-to-target surface angle that is an angle between a bottom surface of the bucket (22) and the construction target surface, and
the drive controller (34) is configured to determine the target jack-up speed to be larger as the bucket-to-target surface angle is smaller.

5. The hydraulic excavator (1) according to claim 1, wherein the drive controller (34) is configured to calculate a bucket-to-traveling body distance that is a distance between the bucket (22) and the traveling body (4) in accordance with the posture of the working front (2), and the drive controller (34) is configured to determine the target jack-up speed to be larger as the calculated bucket-to-traveling body distance is larger.

6. The hydraulic excavator (1) according to claim 1, wherein the drive controller (34) is configured to calculate a traveling body inclination angle based on a result detected by the posture detector (38), and the drive controller (34) is configured to determine the target jack-up speed to be smaller as the calculated traveling body (4) inclination angle is larger.

7. The hydraulic excavator (1) according to claim 1, wherein the drive controller (34) is configured to calculate a slewing body relative angle that is a relative angle between the slewing body (3) and the traveling body (4) based on a traveling direction of the traveling body (4) in accordance with a result detected by the posture detector (38), and the drive controller (34) is configured to determine the target jack-up speed to be smaller as the calculated slewing body relative angle is larger.

8. The hydraulic excavator (1) according to claim 2, wherein the drive controller (34) is configured to correct the target operation speed so that the correction speed does not exceed operator-requested speed corresponding to the operation amount.

## Patentansprüche

1. Hydraulikbagger (1), umfassend: einen Fahrkörper (4), der zum Fahren konfiguriert ist;

einen Schwenkkörper (3), der schwenkbar an dem Fahrkörper (4) montiert ist;
eine Arbeitsfront (2), die schwenkbar an dem Schwenkkörper (3) montiert ist, wobei die Arbeitsfront (2) einen Ausleger (20), einen Arm (21) und eine Schaufel (22) aufweist;
einen Aktor (20A, 21A, 22A), der zum Antreiben des Auslegers (20), des Arms (21) und der Schaufel (22) konfiguriert ist;
einen Betätigungsbetragsdetektor (33), der zum Erfassen eines Betätigungsbetrags einer Betätigungsvorrichtung (33A, 33B) zum Betätigen des Aktors (20A, 21A, 22A) konfiguriert ist;
einen Stellungsdetektor (38), der zum Erfassen einer Stellung der Arbeitsfront (2) und einer Stellung des Schwenkkörpers (3) konfiguriert ist;
eine Zieloberflächenverwaltungseinheit (100), die zum Einstellen einer Konstruktionszieloberfläche und Berechnen einer Zieloberflächendistanz, die eine Distanz zwischen der eingestellten Konstruktionszieloberfläche und der Schaufel (22) ist, konfiguriert ist;
eine Antriebssteuerung (34), die zum Berechnen einer Zielbetätigungsgeschwindigkeit des Aktors (20A, 21A, 22A) basierend auf dem Betätigungsbetrag, der Stellung der Arbeitsfront (2) und der Zieloberflächendistanz, so dass die Schaufel (22) entlang der Konstruktionszieloberfläche gräbt, und zum Erzeugen eines Bewegungsbefehlswerts für den Aktor (20A, 21A, 22A) konfiguriert ist; und
eine Antriebseinheit (35), die zum Antreiben des Aktors (20A, 21A, 22A) gemäß dem Bewegungsbefehlswert konfiguriert ist,
**dadurch gekennzeichnet, dass**:
die Antriebssteuerung (34) zum Bestimmen einer Zielanhebegeschwindigkeit, wenn der Hydraulikbagger (1) den Hydraulikbagger (1) anhebt, basierend auf der Zieloberflächendistanz und zum Korrigieren der Zielbetätigungsgeschwindigkeit basierend auf der bestimmten Zielanhebegeschwindigkeit konfiguriert ist.

2. Hydraulikbagger (1) nach Anspruch 1, ferner umfassend einen Lastdetektor (39), der zum Erfassen einer Last des Aktors (20A, 21A, 22A) konfiguriert ist, wobei
die Antriebssteuerung (34) zum Bestimmen einer Bodenhärte einer von der Arbeitsfront (2) auszuhebenden Stelle basierend auf einem von dem Lastdetektor (39) erfassten Ergebnis, Korrigieren der Zielbetätigungsgeschwindigkeit basierend auf der Bodenhärte und einer basierend auf der Zielanhebegeschwindigkeit berechneten Korrekturgeschwindigkeit und Erzeugen des Bewegungsbefehlswerts basierend auf der korrigierten Zielbetätigungsgeschwindigkeit konfiguriert ist.

**3.** Hydraulikbagger (1) nach Anspruch 1, wobei die Antriebssteuerung (34) zum Bestimmen konfiguriert ist, dass die Zielanhebegeschwindigkeit kleiner ist, wenn die Zieloberflächendistanz kleiner ist.

**4.** Hydraulikbagger (1) nach Anspruch 1, wobei die Zieloberflächenverwaltungseinheit (100) zum Berechnen eines Winkels von Schaufel zu Zieloberfläche, der ein Winkel zwischen einer Bodenfläche der Schaufel (22) und der Konstruktionszieloberfläche ist, konfiguriert ist, und
die Antriebssteuerung (34) zum Bestimmen konfiguriert ist, dass die Zielanhebegeschwindigkeit größer ist, wenn der Winkel von Schaufel zu Zieloberfläche kleiner ist.

**5.** Hydraulikbagger (1) nach Anspruch 1, wobei die Antriebssteuerung (34) zum Berechnen einer Distanz von Schaufel zu Fahrkörper, die eine Distanz zwischen der Schaufel (22) und dem Fahrkörper (4) ist, gemäß der Stellung der Arbeitsfront (2) konfiguriert ist, und die Antriebssteuerung (34) zum Bestimmen konfiguriert ist, dass die Zielanhebegeschwindigkeit größer ist, wenn die berechnete Distanz von Schaufel zu Fahrkörper größer ist.

**6.** Hydraulikbagger (1) nach Anspruch 1, wobei die Antriebssteuerung (34) zum Berechnen eines Fahrkörperneigungswinkels basierend auf einem von dem Stellungsdetektor (38) erfassten Ergebnis konfiguriert ist, und die Antriebssteuerung (34) zum Bestimmen konfiguriert ist, dass die Zielanhebegeschwindigkeit kleiner ist, wenn der berechnete Fahrkörperneigungswinkel (4) größer ist.

**7.** Hydraulikbagger (1) nach Anspruch 1, wobei die Antriebssteuerung (34) zum Berechnen eines Schwenkkörperrelativwinkels, der ein Relativwinkel zwischen dem Schwenkkörper (3) und dem Fahrkörper (4) ist, basierend auf einer Fahrtrichtung des Fahrkörpers (4) gemäß einem von dem Stellungsdetektor (38) erfassten Ergebnis konfiguriert ist, und die Antriebssteuerung (34) zum Bestimmen konfiguriert ist, dass die Zielanhebegeschwindigkeit kleiner ist, wenn der berechnete Schwenkkörperrelativwinkel größer ist.

**8.** Hydraulikbagger (1) nach Anspruch 2, wobei die Antriebssteuerung (34) zum Korrigieren der Zielbetätigungsgeschwindigkeit konfiguriert ist, so dass die Korrekturgeschwindigkeit die vom Bediener angeforderte Geschwindigkeit entsprechend dem Betätigungsbetrag nicht überschreitet.

**Revendications**

**1.** Excavateur hydraulique (1) comprenant :

un corps de déplacement (4) configuré pour se déplacer ;
un corps rotatif (3) monté sur le corps de déplacement (3) de façon à pouvoir être mis en rotation ;
un dispositif de travail avant (2) monté sur le corps rotatif (3) de façon à pouvoir pivoter, le dispositif de travail avant (2) ayant une flèche (20), un bras (21), et un godet (22) ;
un actionneur (20A, 21A, 22A) configuré pour entraîner la flèche (20), le bras (21) et le godet (22) ;
un détecteur d'amplitude d'actionnement (33) configuré pour détecter une amplitude d'actionnement d'un dispositif d'actionnement (33A, 33B) pour actionner l'actionneur (20A, 21A, 22A) ;
un détecteur de posture (38) configuré pour détecter une posture du dispositif de travail avant (2) et une posture du corps rotatif (3) ;
une unité de gestion de surface cible (100) configurée pour définir une surface cible de construction et pour calculer une distance à la surface cible qui est une distance entre la surface cible de construction et le godet (22) ;
un contrôleur d'entraînement (34) configurée pour calculer une vitesse d'actionnement cible de l'actionneur (20A, 21A, 22A) sur la base de l'amplitude d'actionnement, de la posture de dispositif de travail avant (2) et de la distance à la surface cible de telle sorte que le godet (22) excave le long de la surface cible de construction, et pour générer une valeur d'ordre de mouvement vers l'actionneur (20A, 21A, 22A) ; et
une unité d'entraînement (35) configurée pour entraîner l'actionneur (20A, 21A, 22A) en fonction de la valeur d'ordre de mouvement,
**caractérisé en ce que** :
le contrôleur d'entraînement (34) est configuré pour déterminer une vitesse de levage cible quand l'excavateur hydraulique (1) lève l'excavateur hydraulique (1) sur la base de la distance à la surface cible, et corrige la vitesse d'actionnement cible sur la base de la vitesse de levage cible déterminée.

**2.** Excavateur hydraulique (1) selon la revendication 1, comprenant en outre un détecteur de charge (39) configuré pour détecter une charge de l'actionneur (20A, 21A, 22A), dans lequel
le contrôleur d'entraînement (34) est configuré pour déterminer une dureté de sol d'un endroit devant être excavé par le dispositif de travail avant (2) sur la base d'un résultat détecté par le détecteur de charge (39), pour corriger la vitesse d'actionnement cible sur la base de la dureté de sol et de la vitesse corrigée calculée sur la base de la vitesse de levage cible, et pour générer la valeur d'ordre de mouvement sur la base de la vitesse d'actionnement cible corrigée.

3. Excavateur hydraulique (1) selon la revendication 1, dans lequel le contrôleur d'entraînement (34) est configuré pour déterminer la vitesse de levage cible comme étant plus petite lorsque la distance à la surface cible est plus petite.

4. Excavateur hydraulique (1) selon la revendication 1, dans lequel l'unité de gestion de surface cible (100) est configurée pour calculer un angle godet-à-surface cible qui est un angle entre une surface de fond du godet (22) et la surface cible de construction, et le contrôleur d'entraînement (34) est configuré pour déterminer la vitesse de levage cible comme étant plus grande lorsque l'angle godet-à-surface cible est plus petit.

5. Excavateur hydraulique (1) selon la revendication 1, dans lequel le contrôleur d'entraînement (34) est configuré pour calculer une distance godet-à-corps de déplacement qui est une distance entre le godet (22) et le corps de déplacement (4) en fonction de la posture du dispositif de travail avant (2), et le contrôleur d'entraînement (34) est configuré pour déterminer la vitesse de levage cible comme étant plus grande lorsque la distance godet-à-corps de déplacement est plus grande.

6. Excavateur hydraulique (1) selon la revendication 1, dans lequel le contrôleur d'entraînement (34) est configuré pour calculer un angle d'inclinaison de corps de déplacement sur la base d'un résultat détecté par le détecteur de posture (38), et le contrôleur d'entraînement (34) est configuré pour déterminer la vitesse de levage cible comme étant plus petite lorsque l'angle d'inclinaison de corps de déplacement (4) calculé est plus grand.

7. Excavateur hydraulique (1) selon la revendication 1, dans lequel le contrôleur d'entraînement (34) est configuré pour calculer un angle relatif au corps rotatif qui est un angle relatif entre le corps rotatif (3) et le corps de déplacement (4) sur la base d'une direction de déplacement du corps de déplacement (4) en fonction d'un résultat détecté par le détecteur de posture (38), et le contrôleur d'entraînement (34) est configuré pour déterminer la vitesse de levage cible comme étant plus petite lorsque l'angle relatif de corps rotatif calculé est plus grand.

8. Excavateur hydraulique (1) selon la revendication 2, dans lequel le contrôleur d'entraînement (34) est configuré pour corriger la vitesse d'actionnement cible de telle sorte que la vitesse corrigée ne dépasse pas une vitesse demandée par l'opérateur correspondant à l'amplitude d'actionnement.

# Fig. 1

EP 4 098 804 B1

Fig. 2

# Fig. 3

# Fig. 4

EP 4 098 804 B1

# Fig. 5

EP 4 098 804 B1

# Fig. 6

# Fig. 7

# Fig. 8

Target jack-up speed (vertical axis)

0

Bucket-to-target surface angle (horizontal axis)

# Fig. 9

Target jack-up speed (vertical axis)

Bucket-to-traveling body distance (horizontal axis)

0

Fig. 10

Target jack-up speed

0

Traveling body inclination angle

# Fig. 11

Working front is in the same direction
as travelling direction of traveling body

Target jack-up speed

-180    -90    0    90    180

Slewing body relative angle [deg]

# Fig. 12A

# Fig. 12B

Fig. 13

# Fig. 14

Start

Calculate traveling body inclination angle — S110

Detect front posture — S120

Calculate target operation speed of boom, arm and bucket — S130

Calculate bucket-to-target surface angle — S140

Calculate bucket-to-traveling body distance — S150

Calculate slewing body relative angle — S160

Calculate target jack-up speed — S170

Calculate boom correction speed — S180

Calculate thrust — S190

S200
Is soil hard? — NO

YES

S220
Operator-requested speed corresponding to operation amount > boom correction speed? — NO

YES

S210
Not correct target operation speed

S230
Correct so that target operation speed equals to operator-requested speed corresponding to operation amount

S240
Correct target operation speed

Generate drive command value — S250

Generate control current — S260

Return

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5947477 B
- WO 2020049623 A1
- JP 2018080510 A